# EUROPEAN PATENT APPLICATION

(11) **EP 4 056 975 A1**
(43) Date of publication of application: **14.09.2022**
(21) Application number: 20898245.4
(22) Date of filing: 11.12.2020
(51) Int. Cl.: G01L 3/10

(54) **TORQUE SENSOR**

(30) Priority: 13.12.2019 JP 2019225186
(71) Applicant: NAGANO KEIKI CO., LTD., Tokyo 143-8544 (JP)
(72) Inventor: MIYASHITA Kaori, Tokyo 143-8544 (JP); HEMMI Takuya, Tokyo 143-8544 (JP); TAKAMATSU Haruhiko, Tokyo 143-8544 (JP); SUZUKI Toshinori, Tokyo 143-8544 (JP)
(74) Representative: Jenkins, Peter David
(86) International application number: PCT/JP2020/046224
(87) International publication number: WO 2021/117855

(57) **Abstract**

A torque sensor (1) includes: a first area (2), a second area (3) provided around the first area (2), a plurality of beams (4) connecting the first area (2) and the second area (3), and a detector (10) configured to detect torque applied between the first area (2) and the second area (3), the detector being provided on the first area (2). The detector (10) includes an insulation film (11) layered on the first area (2) and a strain gauge (12) layered on the insulation film (11) and deformable in accordance with the torque.

## Description

### TECHNICAL FIELD

The present invention relates to a torque sensor.

### BACKGROUND ART

Torque sensors used in a joint portion of a robot or the like have been conventionally known (see, for instance, Patent Literature 1).

The torque sensor disclosed in Patent Literature 1 includes a strain generation body including an inner ring-shaped unit, an outer ring-shaped unit, and a spoke unit connecting the inner ring-shaped unit with the outer ring-shaped unit. An insulation layer is provided to cover the spoke unit. A resistor is provided on the insulation layer. The torque sensor disclosed in Patent Literature 1 as arranged above is configured to detect torque applied on the strain generation body by detecting a resistance value of the resistor.

### CITATION LIST

### PATENT LITERATURE(S)

Patent Literature 1: WO 2019/163258 A

### SUMMARY OF THE INVENTION

### PROBLEM(S) TO BE SOLVED BY THE INVENTION

It is necessary for the torque sensor disclosed in Patent Literature 1 to cover the spoke unit, on which the resistor is provided, with the insulation layer in order to insulate the strain generation body from the resistor. In such an arrangement, the insulation layer is not formed easily, because the insulation layer needs to be formed in a shape corresponding to the shape of the spoke unit. The formation process of the insulation layer is thus disadvantageously complicated.

An object of the invention is to provide a torque sensor capable of facilitating a manufacturing process.

### MEANS FOR SOLVING THE PROBLEM(S)

A torque sensor according to an aspect of the invention includes: a first area; a second area provided around the first area; a plurality of beams connecting the first area and the second area; and a detector configured to detect torque applied between the first area and the second area, the detector being provided on the first area, in which the detector includes: an insulation film layered on the first area; and a strain gauge layered on the insulation film, the strain gauge being deformable in accordance with the torque.

In the above aspect of the invention, the insulation film is layered on the first area and the strain gauge is layered on the insulation film. The insulation film is thus not required to be provided on the beams connecting the first area and the second area, simplifying the formation process of the insulation film.

In the torque sensor according to the above aspect of the invention, the insulation film preferably includes a plurality of layers.

This arrangement facilitates adjustment of the thickness of the insulation film.

In the torque sensor according to the above aspect of the invention, the detector preferably includes a protection film layered on the strain gauge.

Since the protection film is layered on the strain gauge in this arrangement, ionic pollutants or the like are inhibited from adhering to the strain gauge. This makes it possible to reduce the effect on the surface charge of the strain gauge which may be caused by ionic pollutants or the like, thereby maintaining excellent detection accuracy of the strain gauge.

In the torque sensor according to the above aspect of the invention, the first area preferably includes a connecting portion provided at a position corresponding to one of the beams, and the strain gauge is preferably provided on the connecting portion.

In this arrangement, the strain gauge is provided on the connecting portion in the vicinity of the corresponding one of the beams. Thus, when the beam is strained by torque applied between the first area and the second area, the strain of the beam is easily transmitted to the strain gauge. Accordingly, the torque can be accurately detected based on the detection value of the strain gauge.

In the torque sensor according to the above aspect of the invention, the connecting portion preferably includes an end portion curved along an opening formed between the first area and the second area, and the strain gauge is preferably provided at a position facing the end portion.

In this arrangement, the end portion, at which stress is likely to concentrate when torque is applied between the first area and the second area, is curved, inhibiting uneven stress concentration. Thus, deterioration in the detection accuracy of the strain gauge due to uneven stress concentration can be inhibited.

In the torque sensor according to the above aspect of the invention, the insulation film is preferably made using an insulative glass.

Since the insulation film is made using an insulative glass in this arrangement, an elastic deformation of the insulation film caused by torque applied between the first area and the second area can be reduced compared to an instance where the insulation film is made using, for instance, an insulative resin. The strain caused by the torque is thus more directly transmitted to the strain gauge, thereby enhancing the detection sensitivity of the torque by the strain gauge.

In the torque sensor according to the above aspect of the invention, the torque sensor preferably further includes: a first bridge circuit and a second bridge circuit each including the strain gauge; and a determiner configured to determine whether a difference between outputs of the first bridge circuit and the second bridge circuit exceeds a predetermined threshold.

In this arrangement, the determiner can determine that the difference between the outputs of the first bridge circuit and the second bridge circuit has exceeded the predetermined threshold. Thus, when failure occurs in any of the first bridge circuit and the second bridge circuit each provided with the strain gauge, the failure can be detected.

### BRIEF EXPLANATION OF DRAWINGS

Fig. 1 is a plan view schematically showing a torque sensor according to a first exemplary embodiment of the invention.
Fig. 2 is an enlarged plan view schematically showing a relevant part of the torque sensor of the first exemplary embodiment.
Fig. 3 is an enlarged cross-sectional view schematically showing the relevant part of the torque sensor of the first exemplary embodiment.
Fig. 4 is a plan view schematically showing a torque sensor according to a second exemplary embodiment.
Fig. 5 is an enlarged plan view schematically showing a relevant part of the torque sensor of the second exemplary embodiment.

### DESCRIPTION OF EMBODIMENT(S)

### First Exemplary Embodiment

A torque sensor 1 of a first exemplary embodiment of the invention will be described below with reference to the attached drawings.

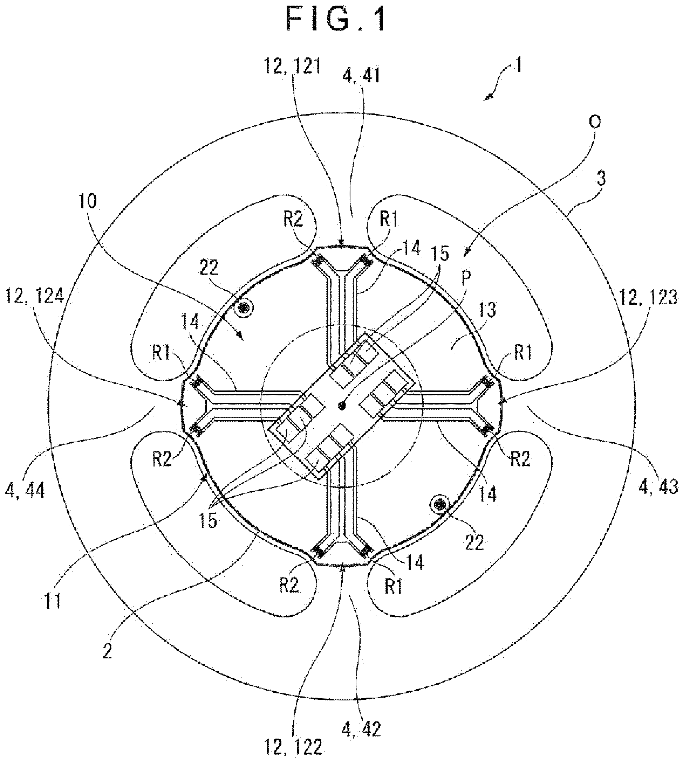

Fig. 1 is a plan view schematically showing a torque sensor 1 of the present exemplary embodiment. The torque sensor 1 of the present exemplary embodiment, which is installed at a joint portion of a robot or the like, is configured to detect torque applied between a first area 2 and a second area 3.

As shown in Fig. 1, the torque sensor 1 includes the first area 2, the second area 3, beams 4, and a detector 10.

### First Area 2

The first area 2 is a metallic disc-shaped part. In the present exemplary embodiment, the first area 2 is connected to, for instance, an output shaft of a drive unit such as a motor. Thus, the torque generated by the drive unit such as a motor is transmissible to the first area 2.

The detector 10 is provided on the first area 2.

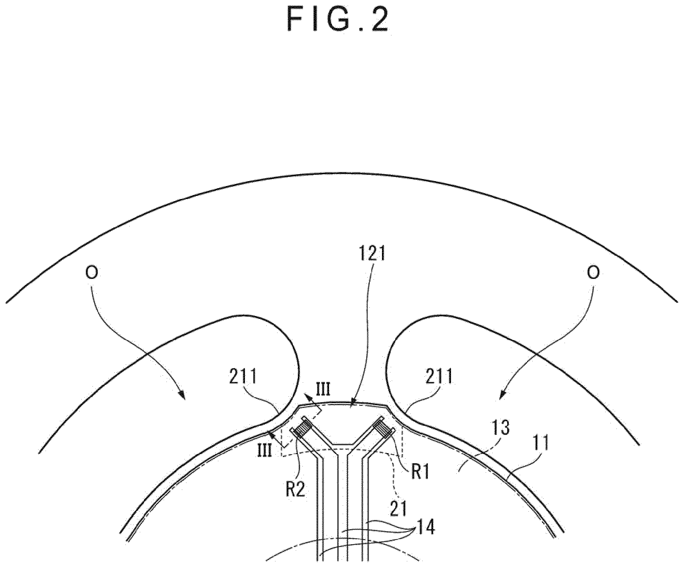

The first area 2 is provided with a first connecting portion 21 (see Fig. 2). The first connecting portion 21 is provided in the first area 2 at a position corresponding to each beam 4 (specifically, an area connected with an end of the beam 4). In the present exemplary embodiment, four first connecting portions 21 are provided corresponding to the beams 4. The first connecting portion 21 is an exemplary connecting portion of the invention. An area corresponding to the first connecting portion 21 is indicated by broken lines in Fig. 2.

Each of the first connecting portions 21 has a first end portion 211 curved along an opening O formed between the first area 2 and the second area 3. In the present exemplary embodiment, each of the first connecting portions 21 has two first end portions 211. The first end portions 211 are each an exemplary end portion of the invention.

An alignment mark 22 is provided in the first area 2 of the present exemplary embodiment. The alignment mark 22 is a positioning mark for providing a later-described strain gauge 12, a conductor 14, and electrodes 15 of the detector 10. In the present exemplary embodiment, two alignment marks 22 are provided at opposite positions across a center P of the first area 2.

### Second Area 3

The second area 3 is a metallic annular part, which is located around the first area 2 in a plan view. In the present exemplary embodiment, the second area 3 is concentric with the first area 2.

Further, in the present exemplary embodiment, the second area 3 is provided with a plurality of holes (not shown). Fasteners (e.g. bolts) are inserted into the holes to fix the second area 3 to a fixed component or the like.

### Beams 4

The beams 4 are located between an outer circumference of the first area 2 and an inner circumference of the second area 3 to connect the first area 2 and the second area 3. Thus, torque generated by the drive unit and transmitted to the first area 2 is transmitted to the second area 3 through the beams 4. Since the second area 3 is fixed to the fixed component in the present exemplary embodiment, toque between the first area 2 and the second area 3 is applied to the beams 4. The beams 4 are thus easily strained by the torque.

In the present exemplary embodiment, the beams 4 are provided by a metallic plate member integrally with the first area 2 and the second area 3. Specifically, the first area 2, the second area 3, and the beams 4 of the present exemplary embodiment are formed by subjecting the metallic plate member to metalworking. The metallic plate member is of a thickness capable of being flexed.

The beams 4 of the present exemplary embodiment include four beams (i.e. a first beam 41, a second beam 42, a third beam 43, and a fourth beam 44).

Each of the beams 41, 42, 43, 44 faces the corresponding paired one of the beams 41, 42, 43, 44 across the first area 2. Specifically, the first beam 41 and the second beam 42 as a pair are located at opposite positions across the first area 2 (i.e. on a common diametral line of a circle defining the first area 2). Further, the third beam 43 and the fourth beam 44 as a pair are located at opposite positions across the first area 2 (i.e. on another common diametral line of the circle defining the first area 2).

In the present exemplary embodiment, an end near the first area 2 and an end near the second area 3 of each of the beams 41, 42, 43, 44 are wider than a center portion thereof. When torque is applied on each of the beams 41, 42, 43, 44, stress is likely to concentrate on the ends thereof. In the present exemplary embodiment, the ends of each of the beams 41, 42, 43, 44 are wide, making it possible to inhibit the beams 41, 42, 43, 44 from being damaged by the torque.

In the present exemplary embodiment, the end near the second area 3 of each of the beams 41, 42, 43, 44 is slightly wider than the end near the first area 2 of each of the beams 41, 42, 43, 44.

### Detector 10

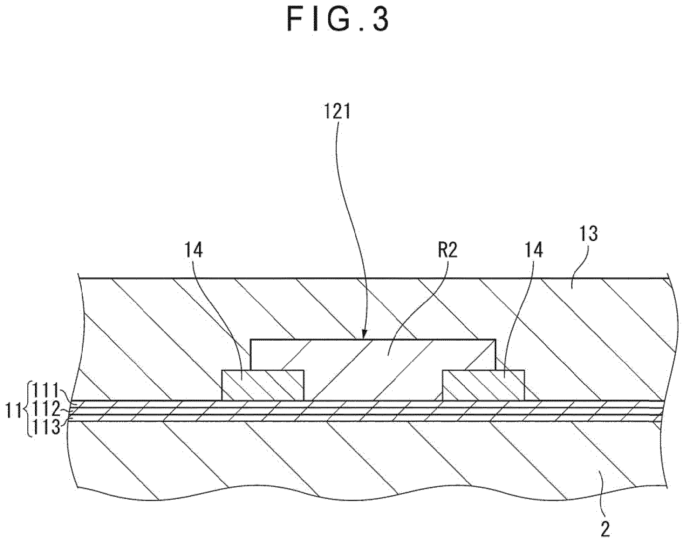

Fig. 2 is an enlarged plan view schematically showing a relevant part of the torque sensor 1. Fig. 3 is an enlarged cross-sectional view schematically showing the relevant part of the torque sensor 1 (specifically, an enlarged cross-sectional view taken along a line III-III in Fig. 2). In the present exemplary embodiment, the detector 10 is configured to detect a strain caused by torque applied between the first area 2 and the second area 3. It should be noted that the thicknesses of an insulation film 11, the strain gauge 12, a protection film 13, and the conductor 14 are exaggerated in Fig. 3 for the purpose of clearly showing a layer arrangement of the detector 10.

As shown in Figs. 1 to 3, the detector 10 includes the insulation film 11, the strain gauges 12, the protection film 13, the conductor 14, and the electrodes 15.

### Insulation Film 11

The insulation film 11 is layered to cover substantially an entire surface of the first area 2. The insulation film 11 is a film for insulating the strain gauges 12, the conductor 14, and the like from the first area 2.

The insulation film 11 of the present exemplary embodiment includes a plurality of layers. Specifically, the insulation film 11 includes three insulation layers (i.e. a first insulation layer 111, a second insulation layer 112, and a third insulation layer 113). Each of the insulation layers 111,112, 113 is formed of an insulative glass material layered on the surface of the first area 2. In other words, the insulation film 11 of the present exemplary embodiment is made using an insulative glass. Thus, in the present exemplary embodiment, an elastic deformation of the insulation film 11 caused by torque applied between the first area 2 and the second area 3 can be reduced compared to an instance where the insulation film 11 is made using, for instance, an insulative resin.

Further, the insulation film 11 of the present exemplary embodiment is made using a transparent insulative glass. This makes it possible to visually recognize the alignment marks 22 provided on the surface of the first area 2 through the insulation film 11.

Furthermore, since the insulation film 11 of the present exemplary embodiment is formed by a plurality of layers, the thickness thereof is easily adjustable.

### Strain Gauge 12

The strain gauge 12 is provided on the insulation film 11 at a position corresponding to each of the beams 41,42, 43, 44. The strain gauge 12 includes four strain gauges (i.e. a first strain gauge 121, a second strain gauge 122, a third strain gauge 123, and a fourth strain gauge 124).

Each of the strain gauges 121, 122, 123, 124 includes two resistors R1 and R2. The resistors R1, R2 of the present exemplary embodiment are formed by printing.

The resistors R1, R2 of each of the strain gauges 121, 122, 123, 124 are provided on the first connecting portion 21 corresponding to one of the beams 41, 42, 43, 44. Specifically, the resistors R1, R2 are provided on the first connecting portion 21 at positions facing the first end portions 211. In this arrangement, when the beams 41, 42, 43, 44 are strained by torque applied between the first area 2 and the second area 3, the strain is transmitted to the resistors R1, R2 via the first connecting portions 21, causing deformation of the resistors R1, R2. In other words, the resistors R1, R2 are deformable in accordance with the torque applied between the first area 2 and the second area 3.

As described above, the resistors R1, R2 of each of the strain gauges 121, 122, 123, 124 are provided at positions facing the first end portions 211. The first end portions 211 are curved along the corresponding openings O. This makes it possible to inhibit stress from concentrating unevenly on the first end portions 211 when torque is applied between the first area 2 and the second area 3. The beams 41, 42, 43, 44 are thus inhibited from being locally strained due to the uneven stress concentration when the beams 41, 42, 43, 44 are strained by the torque. Accordingly, the local strain caused by the uneven stress concentration is inhibited from being transmitted to the strain gauge 12, thereby inhibiting deterioration in the detection accuracy of the strain gauge 12.

Further, the resistors R1, R2 are electrically connected with a circuit board (not shown) through the conductor 14 and the electrodes 15 to form a bridge circuit. Specifically, the resistor R1 and the resistor R2 are connected to a power source potential VDD and a ground potential GND, respectively. The strain gauges 121, 122, 123, 124 are each thus serially connected between the power source potential VDD and the ground potential GND.

In the present exemplary embodiment, the torque sensor 1 is configured to detect torque applied between the first area 2 and the second area 3 by detecting voltage variation between the resistors R1 and R2 caused by the deformation of the resistors R1, R2 in accordance with the torque. The detection method of the torque based on the voltage variation between the resistors R1 and R2 is well known, and thus detailed explanation therefor is omitted.

### Protection Film 13

The protection film 13 is layered in an annular form to cover substantially an entire surface of the first area 2 except for the area provided with the electrodes 15. In Figs. 1 and 2, the protection film 13 is shown as an area surrounded by dash-dotted lines.

In the present exemplary embodiment, the protection film 13 is formed by applying an insulative glass material. In other words, the protection film 13 of the present exemplary embodiment is formed of an insulative glass. This makes it possible for present exemplary embodiment to reduce the effect on the surface charge of the resistors R1, R2 which may be caused by ionic pollutants or the like. That is, deterioration in detection accuracy of the strain gauge 12, which may be caused by the variation in voltage between the resistors R1 and R2 due to ionic pollutants or the like, can be inhibited.

The protection film 13 is not necessarily configured as described above, and optionally made using, for instance, an insulative resin. Further, the protection film 13 is not necessarily layered in an annular form to cover substantially an entire surface of the first area 2 except for the area provided with the electrodes 15. For instance, the protection film 13 is optionally in a form of a band covering the strain gauge 12.

### Conductor 14

The conductor 14 is a component layered on the insulation film 11 and made using an electrically conductive metal such as gold. In the present exemplary embodiment, the conductor 14 electrically connects the strain gauges 12 and the electrodes 15. Further, the conductor 14 is formed by printing.

### Electrode 15

The electrode 15 is a component for electrically connecting the strain gauge 12 to a circuit board (not shown). In the present exemplary embodiment, twelve electrodes 15, which correspond to the resistors R1, R2 of the strain gauges 121, 122, 123, 124, are provided near a center portion of the first area 2.

As described above, the resistors R1, R2 of the strain gauge 12 are connected to the circuit board through the electrodes 15 to form a bridge circuit. The electrodes 15 of the present exemplary embodiment are formed by printing in the same manner as the conductor 14.

### Method of Manufacturing Torque Sensor 1

A method of manufacturing the torque sensor 1 will be described below.

Initially, a metal plate material (e.g. stainless steel) is subjected to metalworking to form the first area 2, the second area 3, and the beams 4. At this time, holes through which fasteners (e.g. bolts) are to be inserted may be formed in the second area 3. Further, screw holes, into which fixation screws for fixing the circuit board to be connected with the electrodes 15 are screwed, may be formed in the first area 2.

Subsequently, the alignment marks 22 are printed on the surface of the first area 2. Then, the surface of the first area 2 is coated with an insulative glass material to provide the insulation film 11. At this time, the insulation film 11 may be formed by spin coating.

Next, the conductor 14 and the electrodes 15 are formed on the insulation film 11 by printing. At this time, positions of the conductor 14 and the electrodes 15 are determined with reference to the alignment mark(s) 22.

Then, each strain gauge 12 is formed so as to be connected with the conductor 14 by printing. At this time, the position of each strain gauge 12 is determined with reference to the alignment mark 22. The strain gauges 12 are thus inhibited from being shifted relative to conductor 14.

Subsequently, an insulative glass material is applied in an annular shape to form the protection film 13 in a manner covering substantially an entire surface of the first area 2 except for a center portion provided with the electrodes 15.

Finally, the circuit board is electrically connected with the electrodes 15.

The following advantages can be achieved by the first exemplary embodiment.
(1) In the present exemplary embodiment, the insulation film 11 is layered on the first area 2 and the strain gauges 12 are layered on the insulation film 11. Thus, the insulation film 11 is not required to be provided on the beams 4 connecting the first area 2 and the second area 3, facilitating the formation process of the insulation film 11.
(2) In the present exemplary embodiment, the insulation film 11 has a plurality of layers, resulting in easy adjustment of the thickness of the insulation film 11.
(3) In the present exemplary embodiment, the protection film 13 is layered on the strain gauges 12, making it possible, for instance, to inhibit ionic pollutants or the like from adhering to the strain gauges 12. This makes it possible to reduce the effect on the surface charge of the strain gauge 12 which may be caused by ionic pollutants or the like, thereby maintaining excellent detection accuracy of the strain gauge 12.
(4) In the present exemplary embodiment, each strain gauge 12 is provided on the first connecting portion 21 in the vicinity of the corresponding one of the beams 4. Thus, when the beam 4 is strained by torque applied between the first area 2 and the second area 3, the strain of the beam 4 is easily transmitted to the strain gauge 12. Accordingly, the torque can be accurately detected based on the detection value of the strain gauge 12.
(5) In the present exemplary embodiment, each first end portion 211, at which stress is likely to concentrate when torque is applied between the first area 2 and the second area 3, is curved, inhibiting uneven stress concentration. Thus, deterioration in the detection accuracy of the strain gauge 12 due to uneven stress concentration can be inhibited.
(6) In the present exemplary embodiment, the insulation film 11 is made using an insulative glass. It is thus possible to reduce an elastic deformation of the insulation film 11 caused by torque applied between the first area 2 and the second area 3, compared to an instance where the insulation film 11 is made using an insulative resin. In this case, the strain caused by the torque is directly transmitted to the strain gauge 12, thereby enhancing the detection sensitivity of the strain gauge 12.
(7) In the present exemplary embodiment, the alignment marks 22 are provided in the first area 2. This facilitates the positioning of the strain gauges 12, the conductor 14, and the electrodes 15.

### Second Exemplary Embodiment

Next, a second exemplary embodiment of the invention will be described below with reference to the attached drawings.

The second exemplary embodiment is different from the first exemplary embodiment in that a strain gauge 12A is provided on a second area 3A. It should be noted that components in the second exemplary embodiment that are the same or similar as those in the first exemplary embodiment are denoted by the same reference numerals to omit detailed description thereof.

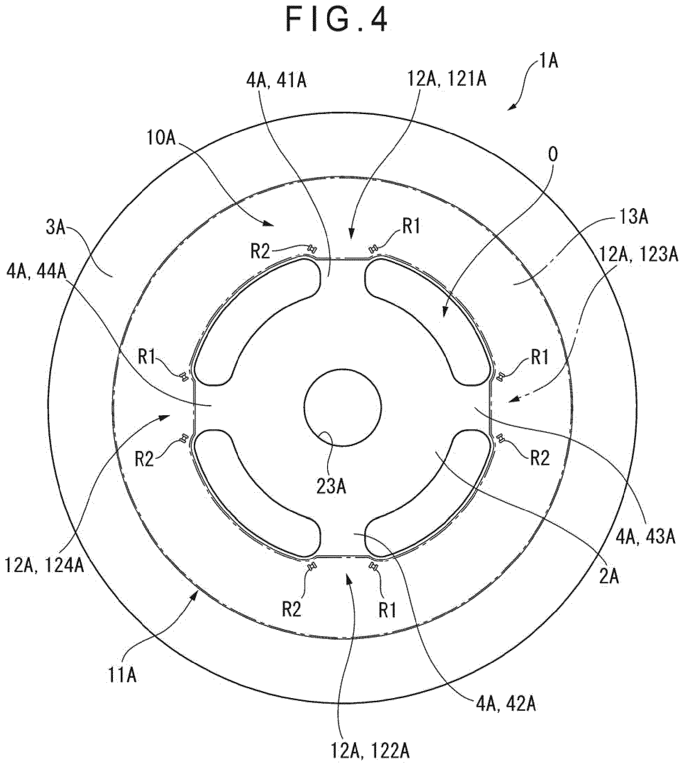

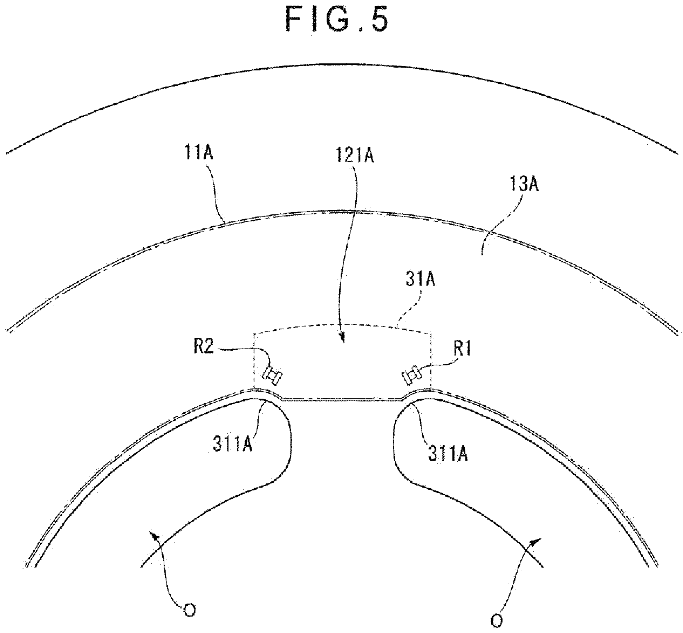

Fig. 4 is a plan view schematically showing a torque sensor 1A of the present exemplary embodiment. Fig. 5 is an enlarged plan view schematically showing a relevant part of the torque sensor 1A.

As shown in Figs. 4 and 5, the torque sensor 1A includes a first area 2A, the second area 3A, beams 4A, and a detector 10A similar to the torque sensor 1 of the first exemplary embodiment.

### First Area 2A

The first area 2A is a metallic part in a form of a circle in plan view. A hole 23A is provided at the center of the first area 2A of the present exemplary embodiment.

### Second Area 3A

As in the first exemplary embodiment, the second area 3A is a metallic annular part provided around the first area 2A in plan view.

In the present exemplary embodiment, the detector 10A is provided on the second area 3A.

Further, a plurality of holes (not shown), into which fasteners (e.g. bolts) are inserted, are formed in the second area 3A, similar to the first exemplary embodiment.

Further, the second area 3A includes a second connecting portion 31A. The second connecting portion 31A is provided in the second area 3A at a position corresponding to each beam 4A (specifically, an area connected with an end of the corresponding one of the beams 4A). In the present exemplary embodiment, four second connecting portions 31A are provided corresponding to the beams 4A. An area corresponding to the second connecting portion 31A is indicated by broken lines in Fig. 5.

Each of the second connecting portions 31A has a second end portion 311A curved along an opening O formed between the first area 2A and the second area 3A. In the present exemplary embodiment, each of the second connecting portions 31A has two second end portions 311A.

### Beams 4A

As in the first exemplary embodiment, the beams 4A are located between an outer circumference of the first area 2A and an inner circumference of the second area 3A to connect the first area 2A and the second area 3A.

In the present exemplary embodiment, the beams 4A are provided by a metallic plate member integrally with the first area 2A and the second area 3A.

The beams 4A of the present exemplary embodiment include four beams (i.e. a first beam 41A, a second beam 42A, a third beam 43A, and a fourth beam 44A).

Each of the beams 41A, 42A, 43A, 44A faces the corresponding paired one of the beams 41A, 42A, 43A, 44A across the first area 2A.

As in the first exemplary embodiment, an end near the first area 2A and an end near the second area 3A of each of the beams 41A, 42A, 43A, 44A are wider than a center portion thereof in the present exemplary embodiment.

### Detector 10A

In the present exemplary embodiment, the detector 10A is configured to detect a strain caused by torque applied between the first area 2A and the second area 3A. The detector 10A includes an insulation film 11A, the strain gauges 12A, and a protection film 13A. Although illustration of the conductor and the electrodes connected to each strain gauge 12A is omitted in Figs. 4, 5, the conductor and the electrodes are provided on the second area 3A as in the strain gauge 12A.

### Insulation Film 11A

The insulation film 11A is layered to cover substantially a half of the surface of the second area 3A. The insulation film 11A is a film for insulating the strain gauges 12A, the conductor (not shown), and the like from the second area 3A.

As in the first exemplary embodiment, the insulation film 11A of the present exemplary embodiment includes a plurality of insulation layers (not shown). Each of the insulation layers is formed of an insulative glass material layered on the surface of the second area 3A.

### Strain Gauge 12A

The strain gauge 12A is provided on the insulation film 11A at a position corresponding to each of the beams 41A, 42A, 43A, 44A. As in the first exemplary embodiment, the strain gauge 12A includes four strain gauges (i.e. a first strain gauge 121A, a second strain gauge 122A, a third strain gauge 123A, and a fourth strain gauge 124A).

Each of the strain gauges 121A, 122A, 123A, 124A includes two resistors R1 and R2.

The resistors R1, R2 of each of the strain gauges 121A, 122A, 123A, 124A are provided on the second connecting portion 31A corresponding to one of the beams 41A, 42A, 43A, 44A. Specifically, the resistors R1, R2 are provided on the second connecting portion 31A at positions facing the second end portions 311A. In this arrangement, when the beams 41A, 42A, 43A, 44A are strained by torque applied between the first area 2A and the second area 3A, the strain is transmitted to the resistors R1, R2 via the second connecting portions 31A, causing deformation of the resistors R1, R2.

As described above, the resistors R1, R2 of each of the strain gauges 121A, 122A, 123A, 124A are provided at positions facing the second end portions 311A. The second end portions 311A are curved along the corresponding openings O. This makes it possible to inhibit stress from concentrating unevenly on the second end portion 311A when torque is applied between the first area 2A and the second area 3A.

### Protection Film 13A

The protection film 13A is layered in an annular form to cover the insulation film 11A. In Figs. 4 and 5, the protection film 13A is shown as an area surrounded by dash-dotted lines.

As in the first exemplary embodiment, the protection film 13A is formed by applying an insulative glass material in the present exemplary embodiment. This makes it possible to reduce the effect on the surface charge of the resistors R1, R2 which may be caused by ionic pollutants or the like. That is, deterioration in detection accuracy of the strain gauge 12A, which may be caused by the variation in voltage between the resistors R1 and R2 due to ionic pollutants or the like, can be inhibited.

The protection film 13A is not necessarily configured as described above, and optionally made using, for instance, an insulative resin. Further, the protection film 13A is not necessarily layered in an annular form to cover the insulation film 11A. For instance, the protection film 13A is optionally in a form of a band covering the strain gauge 12A.

The following advantages can be achieved by the second exemplary embodiment.
(8) In the present exemplary embodiment, the insulation film 11A is layered on the second area 3A and the strain gauges 12A are layered on the insulation film 11A. Thus, the insulation film 11A is not required to be provided on the beams 4A connecting the first area 2A and the second area 3A, facilitating the formation process of the insulation film 11A.
(9) In the present exemplary embodiment, each strain gauge 12A is provided on the second connecting portion 31A in the vicinity of the corresponding one of the beams 4A. Thus, when the beam 4A is strained by torque applied between the first area 2A and the second area 3A, the strain of the beam 4A is easily transmitted to the strain gauge 12A. Accordingly, the torque can be accurately detected based on the detection value of the strain gauge 12A.
(10) In the present exemplary embodiment, each second end portion 311A, at which stress is likely to concentrate when torque is applied between the first area 2A and the second area 3A, is curved, inhibiting uneven stress concentration. Thus, deterioration in the detection accuracy of the strain gauge 12A due to uneven stress concentration can be inhibited.

### Modifications

It should be noted that the invention is not limited to the above-described embodiments but includes modifications, improvements, and the like as long as an object of the invention can be achieved.

In each of the above exemplary embodiments, the first area (2, 2A) is connected to the drive unit and the second area (3, 3A) is fixed to the fixed component. The invention, however, is not limited thereto. For instance, the second area (3, 3A) may be connected to the drive unit and the first area (2, 2A) may be fixed to the fixed component.

In each of the above exemplary embodiments, the first area (2, 2A) is disc-shaped. The invention, however, is not limited thereto.
For instance, the first area may be in a form of a rectangle, a cross-shape, or an annular shape in plan view. Alternatively or additionally, the first area may be provided with concave/convex portion(s) and/or step(s) dented or protruded in a thickness direction.

In each of the above exemplary embodiments, the second area 3 is in an annular form. The invention, however, is not limited thereto. For instance, the second area may be in a form of an angular ring or the like as long as the second area encircles the first area. Further, the second area may be provided with a concave and/or convex portion(s) dented or protruded in a thickness direction.

In each of the above exemplary embodiments, the first area (2, 2A), the second area (3, 3A), and the beams (4, 4A) are integrally made using a metallic plate member. The invention, however, is not limited thereto. For instance, the first area, the second area, and the beams may be made using a resin material or a ceramic material. Further, the first area, the second area, and the beams may be made in a form of independent components that may be bonded by welding or the like.

In each of the above exemplary embodiments, four beams (4, 4A) are provided. The invention, however, is not limited thereto. For instance, five or more beams or three or less beams may be provided. In other words, it is only necessary that a plurality of beams are provided. Further, paired ones of the beams are not necessarily provided at positions opposite to each other across the first area.

In each of the above exemplary embodiments, the end near the first area (2, 2A) and the end near the second area (3, 3A) of the beam (41, 41A, 42, 42A, 43, 43A, 44, 44A) are wider than the center portion thereof. The invention, however, is not limited thereto. For instance, the beams may be formed to have the same width at the ends and the center portion.

In each of the above exemplary embodiments, the insulation film (11, 11A) is made using an insulative glass. The invention, however, is not limited thereto. For instance, the insulation film may be made using an insulative resin.

In each of the above exemplary embodiments, the insulation film (11, 11A) includes a plurality of layers. The invention, however, is not limited thereto. For instance, the insulation film may be formed by a single insulation layer.

Further, the insulation film may be formed, for instance, by an insulation layer(s) made using an insulative glass and an insulation layer(s) made using an insulative resin. In other words, the insulation film may be formed by a plurality of insulation layers which are different in properties. Such an arrangement results in an insulation film having a desired linear expansion coefficient. Specifically, an insulation film of which linear expansion coefficient is equivalent to that of the first area can be obtained.

In the first exemplary embodiment, the first end portions 211 of the first connecting portion 21 are curved along the openings O. The invention, however, is not limited thereto. For instance, the first end portions of the first connecting portion may be linear portions or corners.

In the second exemplary embodiment, the second end portions 311A of the second connecting portion 31A are curved along the openings O. The invention, however, is not limited thereto. For instance, the second end portions of the second connecting portion may be right-angled or corners.

In each of the above exemplary embodiments, the protection film (13, 13A) is layered on the strain gauges (12, 12A). The invention, however, is not limited thereto. For instance, the scope of the invention encompasses an arrangement in which the protection film is not layered on the strain gauges.

In each of the above exemplary embodiments, the resistors R1, R2 are formed by printing. The invention, however, is not limited thereto. For instance, the resistors may be formed by vapor deposition, sputtering, or the like.

In each of the above exemplary embodiments, the conductor 14 and the electrodes 15 are formed by printing. The invention, however, is not limited thereto. For instance, the conductor and the electrodes may be formed by vapor deposition, sputtering, or the like.

In the first exemplary embodiment, the insulation film 11 is layered to cover substantially an entire surface of the first area 2. The invention, however, is not limited thereto. For instance, the insulation film may be layered to cover a part of the first area as long as the insulation film is layered at least on the part provided with the strain gauges, the conductor, and the electrodes. In other words, it is only necessary for the insulation film to be provided so that the strain gauges, the conductor, and the electrodes are insulated from the first area.

In the second exemplary embodiment, the insulation film 11A is layered to cover substantially a half of the surface of the second area 3A. The invention, however, is not limited thereto. For instance, the insulation film may be layered to cover an entire surface of the second area as long as the insulation film is layered at least on the part provided with the strain gauges, the conductor, and the electrodes. In other words, it is only necessary for the insulation film to be provided so that the strain gauges, the conductor, and the electrodes are insulated from the second area.

In each of the above exemplary embodiments, the conductor 14 electrically connects the strain gauges (12, 12A) and the electrodes 15. The invention, however, is not limited thereto. For instance, the conductor 14 may electrically connect a correction resistor to the electrode, in addition to the strain gauge. In this arrangement, voltage variation between the resistors caused by temperature or the like can be compensated by subtracting voltage variation in the correction resistor from voltage variation between the resistors. The detection accuracy of the strain gauge can thus be improved.

In each of the above exemplary embodiments, the sensor may include a plurality of bridge circuits each provided with the strain gauge (e.g. a first bridge circuit and a second bridge circuit). Further, the sensor may include a determiner configured to determine whether a difference between outputs of the first bridge circuit and the second bridge circuit exceeds a predetermined threshold.

In such an arrangement, when failure occurs in any of the first bridge circuit and the second bridge circuit each provided with the strain gauge, the failure can be detected.

In each of the above exemplary embodiments, the torque sensor 1 is installed at a joint portion of a robot or the like. The invention, however, is not limited thereto. For instance, the torque sensor may be installed in transportation machines (e.g. vehicles), industrial machines (e.g. processing machines), and the like. The torque sensor is applicable to a portion, to which torque is applied, of a component in a variety of fields.

### EXPLANATION OF CODES

1, 1A...torque sensor, 2, 2A...first area, 3, 3A...second area, 4, 4A...beam, 10, 10A...detector, 11, 11A...insulation film, 12, 12A...strain gauge, 13, 13A...protection film, 14...conductor, 15...electrode, 21...first connecting portion (connecting portion), 22...alignment mark, 31A...second connecting portion, 41, 41A...first beam, 42, 42A...second beam, 43, 43A...third beam, 44, 44A...fourth beam, 111...firstinsulation layer, 112...second insulation layer, 113...third insulation layer, 121, 121A...first strain gauge, 122, 122A...second strain gauge, 123, 123A...third strain gauge, 124, 124A...fourth strain gauge, 211...first end portion (end portion), 311...second end portion, O...opening, R1...resistor, R2...resistor

## Claims

1. A torque sensor comprising:
a first area;
a second area provided around the first area;
a plurality of beams connecting the first area and the second area; and
a detector configured to detect torque applied between the first area and the second area, the detector being provided on the first area, wherein
the detector comprises:
an insulation film layered on the first area; and
a strain gauge layered on the insulation film, the strain gauge being deformable in accordance with the torque.

2. The torque sensor according to claim 1, wherein
the insulation film comprises a plurality of layers.

3. The torque sensor according to claim 1 or 2, wherein
the detector comprises a protection film layered on the strain gauge.

4. The torque sensor according to any one of claims 1 to 3, wherein
the first area comprises a connecting portion provided at a position corresponding to one of the beams, and
the strain gauge is provided on the connecting portion.

5. The torque sensor according to claim 4, wherein
the connecting portion comprises an end portion curved along an opening formed between the first area and the second area, and
the strain gauge is provided at a position facing the end portion.

6. The torque sensor according to any one of claims 1 to 5, wherein
the insulation film is made using an insulative glass.

7. The torque sensor according to any one of claims 1 to 6, further comprising:
a first bridge circuit and a second bridge circuit each comprising the strain gauge; and
a determiner configured to determine whether a difference between outputs of the first bridge circuit and the second bridge circuit exceeds a predetermined threshold.
